(19) Europäisches Patentamt
European Patent Office
Office européen des brevets

(11) **EP 2 935 819 B1**

(12) **EUROPÄISCHE PATENTSCHRIFT**

(45) Veröffentlichungstag und Bekanntmachung des Hinweises auf die Patenterteilung:
**19.10.2016  Patentblatt 2016/42**

(21) Anmeldenummer: **13798288.0**

(22) Anmeldetag: **21.11.2013**

(51) Int Cl.:
*F01N 3/08* (2006.01)       *F01N 3/10* (2006.01)
*F01N 3/20* (2006.01)       *F01N 9/00* (2006.01)
*F01N 11/00* (2006.01)      *F02M 26/06* (2016.01)
*F02M 26/28* (2016.01)

(86) Internationale Anmeldenummer:
**PCT/EP2013/074351**

(87) Internationale Veröffentlichungsnummer:
**WO 2014/095215 (26.06.2014 Gazette 2014/26)**

(54) **VERFAHREN ZUR DIAGNOSE EINES ABGASKATALYSATORS, DIAGNOSEEINRICHTUNG SOWIE KRAFTFAHRZEUG MIT EINER SOLCHEN**

METHOD FOR DIAGNOSING AN EXHAUST GAS CATALYST, DIAGNOSTIC DEVICE AND VEHICLE EQUIPPED WITH THE LATTER

PROCÉDÉ POUR DIAGNOSTIQUER UN CATALYSEUR D'ÉCHAPPEMENT, DISPOSITIF DE DIAGNOSE ET VÉHICULE ÉQUIPPÉ AVEC UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2012  DE 102012025002**

(43) Veröffentlichungstag der Anmeldung:
**28.10.2015  Patentblatt 2015/44**

(73) Patentinhaber: **Volkswagen Aktiengesellschaft**
**38440 Wolfsburg (DE)**

(72) Erfinder:
• **VELDTEN, Burkhard**
**31234 Edemissen (DE)**
• **KULASZEWSKI, Maciej**
**38120 Braunschweig (DE)**

(56) Entgegenhaltungen:
**WO-A2-2007/098514      US-A1- 2009 293 451**
**US-A1- 2011 146 269      US-A1- 2012 233 984**

EP 2 935 819 B1

**Beschreibung**

Die Erfindung betrifft ein Verfahren zur Diagnose eines in einer Abgasanlage einer Brennkraftmaschine angeordneten Abgaskatalysators zur katalytischen Umsetzung zumindest einer Abgaskomponente der Brennkraftmaschine, eine zur Ausführung des Verfahrens eingerichtete Diagnoseeinrichtung sowie ein Kraftfahrzeug mit einer solchen Diagnoseeinrichtung. In einer besonderen Ausführung handelt es sich bei dem Abgaskatalysator um einen nach dem Prinzip der selektiven katalytischen Reduktion funktionierenden Katalysator zur Reduktion von Stickoxiden $NO_x$.

Brennkraftmaschinen, die ständig oder zeitweise mit einem mageren Luft-Kraftstoff-Gemisch betrieben werden, produzieren Stickoxide $NO_x$ (hauptsächlich $NO_2$ und $NO$), die $NO_x$-reduzierende Maßnahmen erforderlich machen. Eine motorische Maßnahme, um die $NO_x$-Rohemission im Abgas zu reduzieren, stellt die Abgasrückführung dar, bei der ein Teil des Abgases des Brennkraftmaschine in ihre Verbrennungsluft rückgeführt wird, wodurch die Verbrennungstemperaturen gesenkt und somit die $NO_x$-Entstehung ($NO_x$-Rohemission) reduziert wird. Die Abgasrückführung ist jedoch in der Regel nicht ausreichend, um gesetzliche $NO_x$-Grenzwerte einzuhalten, weswegen zusätzlich eine aktive Abgasnachbehandlung erforderlich ist, welche die $NO_x$-Endemission durch katalytische Reduzierung von $NO_x$ zu Stickstoff $N_2$ senkt. Eine bekannte $NO_x$-Abgasnachbehandlung sieht den Einsatz von $NO_x$-Speicherkatalysatoren vor, die im mageren Betrieb (bei $\lambda > 1$) Stickoxide in Form von Nitraten speichern und in kurzen Intervallen mit einer fetten Abgasatmosphäre ($\lambda < 1$) die gespeicherten Stickoxide desorbieren und in Gegenwart der im fetten Abgas vorhandenen Reduktionsmittel zu Stickstoff $N_2$ reduzieren.

Als weiterer Ansatz zur Konvertierung von Stickoxiden in Abgasen magerlauffähiger Verbrennungsmotoren ist der Einsatz von Katalysatorsystemen bekannt, die nach dem Prinzip der selektiven katalytischen Reduktion (SCR für selective catalytic reduction) arbeiten. Diese Systeme umfassen zumindest einen SCR-Katalysator, der in Gegenwart eines dem Abgas zugeführten Reduktionsmittels, üblicherweise Ammoniak $NH_3$, selektiv die Stickoxide des Abgases in Stickstoff und Wasser umwandelt. Dabei kann das Ammoniak aus einer wässrigen Ammoniaklösung dem Abgasstrom zudosiert werden oder aus einer Vorläuferverbindung, beispielsweise Harnstoff in Form einer wässrigen Lösung oder fester Pellets, im Wege der Thermolyse und Hydrolyse erhalten werden. Ein neuerer Ansatz für die Ammoniakspeicherung im Fahrzeug stellen $NH_3$-Speichermaterialien dar, die Ammoniak in Abhängigkeit von der Temperatur reversibel binden. Insbesondere sind in diesem Zusammenhang Metallamminspeicher bekannt, beispielsweise $MgCl_2$, $CaCl_2$ und $SrCl_2$, die Ammoniak in Form einer Komplexverbindung speichern, um dann beispielsweise als $MgCl_2(NH_3)_x$, $CaCl_2(NH_3)_x$ beziehungsweise $SrCl_2(NH_3)_x$ vorzuliegen. Aus diesen Verbindungen kann durch Zufuhr von Wärme das Ammoniak wieder freigesetzt werden.

Es ist ferner bekannt, die Funktionsfähigkeit von Abgaskatalysatoren, wie etwa SCR-Katalysatoren oder $NO_x$-Speicherkataiysatoren, im Wege einer On-Board-Diagnose (OBD) laufend zu kontrollieren. Hierzu wird üblicherweise das Signal eines dem Katalysator nachgeschalteten Abgassensors ($NO_x$-Sensors) für die entsprechende Abgaskomponente verwendet, um die Konzentration dieser Abgaskomponente stromab des Abgaskatalysators zu messen. Ferner wird die Konzentration der Abgaskomponente stromauf des Katalysators, d.h. die motorische Rohemission, bestimmt. Dieses kann durch Messung der Konzentration mittels eines weiteren, stromauf des Katalysators angeordneten Abgassensors erfolgen. Häufiger erfolgt die Ermittlung der Rohemission jedoch durch Modellierung unter Verwendung gespeicherter Kennfelder, welche die Konzentration der Komponente in Abhängigkeit von einem aktuellen Betriebspunkt der Brennkraftmaschine abbilden. Der Wirkungsgrad $\eta$ des Abgaskatalysators hinsichtlich der Konvertierung der Komponente ergibt sich dann beispielsweise aus folgender Gleichung, wobei c_end die hinter dem Katalysator gemessene Konzentration (oder der Gehalt) der Abgaskomponente ist und c_roh die Rohemission der Brennkraftmaschine hinsichtlich dieser Komponente:

$$\eta = 1 - \frac{c\_end}{c\_roh}$$

Der Wirkungsgrad $\eta$ kann damit Werte von 0 bis 1 einnehmen. Ein ideal funktionierender Katalysator, der eine vollständige katalytische Umsetzung bewirkt (c_end = 0), weist damit einen Wirkungsgrad $\eta$ von 1 auf, während bei einem vollständig inaktiven Katalysator $\eta = 0$ ist (c_end = c_roh).

DE 10 2010 042 442 A1 beschreibt eine Abgasanlage mit einem SCR-Katalysator sowie mit einer Niederdruck-Abgasrückführung, mittels welcher ein Abgasteilstrom stromab einer Turbine (niederdruckseitig) eines Abgasturboladers sowie des SCR-Katalysators entnommen und der Verbrennungsluft der Brennkraftmaschine stromauf eines Verdichters (niederdruckseitig) des Abgasturboladers zugeführt wird. In der Abgasrückführleitung ist ein $NO_x$-Sensor angeordnet, welcher die Konzentration an Stickoxiden misst, um die Brennkraftmaschine auf Basis der so ermittelten $NO_x$-Konzentration zu steuern, insbesondere die AGR-Rate oder das Luftkraftstoffverhältnis. Die Abgasrückführleitung ist ferner über einen Bypass mit der Luftleitung der Brennkraftmaschine verbunden, welcher stromab des Verdichters, also auf seiner Hochdruckseite, in die Luftleitung mündet. Um einen Offset des $NO_x$-Sensors für dessen Kalibrierung zu bestimmen, wird der Bypass geöffnet und hierdurch eine Umkehr der Strömungsrichtung in der Abgasrückführleitung bewirkt, sodass der NO$_x$-Sensor mit Frischluft beaufschlagt wird. Eine Diagnose des SCR-Katalysators wird hier nicht beschrieben.

Des Weiteren sind aus dem Dokument US 2011/0146269 A1 ein Verfahren und ein System zur Emissionskontrolle bekannt. In einer Abgasanlage einer Brennkraftmaschine ist ein Abgaskatalysator zur Umsetzung mindestens einer Abgaskomponente der Brennkraftmaschine angeordnet. Es ist eine Abgasrückführung vorgesehen, über welche ein Teilstrom des Abgases stromab des Katalysators entnommen und der Verbrennungsluft der Brennkraftmaschine zugeführt wird. In der Abgasanlage befindet sich ein Sensor zur Messung einer Abgaskomponente stromauf des Abgaskatalysators.

Aus dem Dokument US 2012/0233984 A1 gehen ein Verfahren und ein System für die Überwachung einer NOx-Konversionseffizienz hervor. In einer Abgasanlage eines Brennkraftmaschine eines Fahrzeugs sind stromab und stromauf eines SCR-Katalysators NOx-Sensoren angeordnet, so dass die NOx-Konversionsrate des SCR-Katalysators mittels der von den Sensoren erhaltenen Signale bestimmt werden kann. Wenn die stromauf gemessene kumulierte NOx-Menge nach einem Zyklus größer als eine kalibrierte NOx-Menge ist, wird bestimmt, ob die NOx-Konversionseffizienzrate akzeptabel ist. Werte der kumulierten NOx-Menge werden zur Nutzung in späteren Berechnungen in folgenden Zyklen gespeichert, sofern die Effizienzrate akzeptabel ist.

Der Erfindung liegt die Aufgabe zugrunde, ein Verfahren zur Diagnose eines Abgaskatalysators hinsichtlich seiner Konvertierungsleistung einer Abgaskomponente zur Verfügung zu stellen, welches sich durch eine verbesserte Genauigkeit auszeichnet. Das Verfahren soll beispielsweise zur Diagnose eines SCR-Katalysators geeignet sein. Es sollen ferner eine zur Ausführung des Verfahrens geeignete Diagnoseeinrichtung sowie ein entsprechendes Kraftfahrzeug zur Verfügung gestellt werden.

Diese Aufgaben werden durch ein Verfahren zur Diagnose eines in einer Abgasanlage einer Brennkraftmaschine angeordneten Abgaskatalysators, einer Diagnoseeinrichtung sowie ein Kraftfahrzeug mit den Merkmalen der unabhängigen Ansprüche gelöst.

Die Erfindung bezieht sich dabei auf eine Brennkraftmaschine, welche eine Abgasrückführung aufweist, mit welcher ein Teilstrom des Abgases stromab des Abgaskatalysators entnommen und der Verbrennungsluft der Brennkraftmaschine zugeführt wird. Das erfindungsgemäße Verfahren umfasst die Maßnahmen:

- Bestimmung einer aktuellen Rohemission der Brennkraftmaschine bezüglich der Abgaskomponente,
- Messung einer aktuellen Konzentration der Abgaskomponente im Abgas stromauf des Abgaskatalysators, und
- Bestimmung eines Diagnosewerts des Abgaskatalysators bezüglich der Umsetzung der Abgaskomponente in Abhängigkeit von der modellierten Rohemission der Brennkraftmaschine und der im Abgas gemessenen Konzentration.

Anders als bei herkömmlichen Verfahren wird somit die aktuelle Konzentration der Abgaskomponente nicht stromab des zu diagnostizierenden Abgaskatalysators bestimmt, sondern stromauf von diesem. Dabei macht sich die Erfindung den Umstand zunutze, dass auch das vor dem Abgaskatalysator gemessene Abgas aufgrund der Abgasrückführung durch die Aktivität des Abgaskatalysators beeinflusst wird. Je geringer dessen Umsatzleistung, desto höher ist die Konzentration der Abgaskomponente an der Messstelle stromauf des Abgaskatalysators. Da ein für die Messung der Abgaskomponente erforderliche Abgassensor aufgrund seiner vergleichsweise motornahen Anordnung gegenüber einem hinter dem Katalysator geschalteten Sensor nach einem Motorkaltstart deutlich früher seine Betriebsfähigkeit erreicht und somit früher freigegeben wird, kann die Häufigkeit, mit welcher die Diagnose des Abgaskatalysators durchgeführt wird, gegenüber herkömmlichen Konzepten deutlich erhöht werden. Hierdurch ergibt sich eine erhöhte Genauigkeit und Zuverlässigkeit der Katalysatordiagnose. Zudem kann durch die erfindungsgemäße Vorgehensweise auch ein geschädigter Katalysator erkannt werden, der lediglich eine Teilkomponente eines Katalysatorsystems darstellt.

Vorzugsweise erfolgt die Messung der Konzentration der Abgaskomponente an einer motornahen Position der Abgasanlage. Hierunter wird jegliche Stelle verstanden, die einer Unterbodenposition der Abgasanlage vorgeschaltet ist. Insbesondere befindet sich der Messpunkt der Konzentration der Abgaskomponente höchstens 120 cm von einem Zylinderauslass der Brennkraftmaschine entfernt, vorzugsweise höchstens 100 cm und besonders bevorzugt höchstens 80 cm. Durch die motornahe Anordnung des zur Messung erforderlichen Sensors wird ein besonders frühzeitiges Erreichen seiner Einsatzbereitschaft nach einem Motorkaltstart erzielt und somit eine besonders häufige Durchführung der Katalysatordiagnose.

In bevorzugter Ausgestaltung des Verfahrens wird in Abhängigkeit eines Verhältnisses der modellierten Rohemission und der gemessenen Konzentration ein Wirkungsgrad des Abgaskatalysators als Diagnosewert bestimmt. Besonders bevorzugt wird der Wirkungsgrad $\eta$ gemäß folgender Gleichung bestimmt, worin NOx_mes die vor dem Abgaskatalysator gemessene Konzentration der Abgaskomponente, NOx_roh die Rohemission der Abgaskomponente und $\alpha$_AGR die Abgasrückführrate, also der Anteil rückgeführten Abgases in der Verbrennungsluft der Brennkraftmaschine, bedeutet:

$$\eta = 1 - \frac{\alpha\_AGR^{-1}(NOx\_mes - NOx\_roh)}{NOx\_roh}$$

Die Gleichung berücksichtigt, dass der stromauf der Abgaskatalysators angeordnete Sensor die Summe der motorischen Rohemission bezüglich der Abgaskomponente misst als auch den durch den Abgaskatalysator nicht umgesetzten und über die AGR rückgeführten Anteil.

Nach einer vorteilhaften Ausgestaltung wird der für den Abgaskatalysator bestimmte Diagnosewert, beispielsweise der Wirkungsgrad η, mit einem entsprechenden Sollwert, der insbesondere für einen neuen und vollständig intakten Abgaskatalysator bestimmt wird, verglichen. Wird dabei eine vorbestimmte Mindestabweichung von dem Sollwert überschritten, so wird ein Fehler des Abgaskatalysators festgestellt und ausgegeben. Alternativ wird der Diagnosewert mit einem entsprechenden Schwellenwert verglichen und bei Überschreitung des Schwellenwerts (abhängig von der Art des Schwellenwerts nach oben oder unten) ein Fehler des Katalysators festgestellt und ausgegeben. Die Fehlerausgabe erfolgt jeweils vorzugsweise an eine Motorsteuerung der Brennkraftmaschine und/oder als optische und/oder akustische Fehlermeldung für einen Fahrer. In bevorzugter Ausführung wird der Schwellenwert und/oder der Sollwert in Abhängigkeit von einem Betriebspunkt der Brennkraftmaschine, insbesondere einer Motorlast und einer Motordrehzahl, vorbestimmt. Hierfür kann ein entsprechendes gespeichertes Kennfeld verwendet werden.

Die aktuelle Rohemission der Brennkraftmaschine wird vorzugsweise ebenfalls in Abhängigkeit von einem aktuellen Betriebspunkt der Brennkraftmaschine modelliert, wobei auch hier vorzugsweise ein Kennfeld verwendet werden kann. Ein solches stellt die modellierte Rohemission der Brennkraftmaschine in Abhängigkeit von dem Betriebspunkt, insbesondere Motorlast und Drehzahl, dar.

Die Erfindung betrifft ferner eine Diagnoseeinrichtung zur Diagnose eines in einer Abgasanlage einer Brennkraftmaschine angeordneten Abgaskatalysators zur katalytischen Umsetzung zumindest einer Abgaskomponente der Brennkraftmaschine, wobei die Diagnoseeinrichtung zur Ausführung des erfindungsgemäßen Verfahrens eingerichtet ist. Die Diagnoseeinrichtung umfasst insbesondere einen computerlesbaren Algorithmus zur Ausführung des Verfahrens sowie gegebenenfalls notwendige Kennlinien und Kennfelder in computerlesbarer gespeicherter Form. Die Diagnoseeinrichtung kann eine eigenständige Einrichtung sein mit entsprechenden Signalleitungen oder in einer Motorsteuereinrichtung integriert sein.

Die Erfindung betrifft ferner ein Kraftfahrzeug mit einer Brennkraftmaschine; einer an dieser angeschlossenen Abgasanlage; einen in der Abgasanlage angeordneten Abgaskatalysator zur katalytischen Umsetzung zumindest einer Abgaskomponente der Brennkraftmaschine; einem stromauf des Abgaskatalysators angeordneten Abgassensor zur Messung einer aktuellen Konzentration der Abgaskomponente im Abgas; einer Abgasrückführung zur Entnahme eines Teilstroms des Abgases stromab des Abgaskatalysators und Zuführung des entnommenen Abgasteilstroms zu der Verbrennungsluft der Brennkraftmaschine; sowie einer zur Ausführung des Verfahrens eingerichtete Diagnoseeinrichtung.

Vorzugsweise handelt es sich bei um den zu diagnostizierenden Abgaskatalysator um einen Katalysator zur Reduktion von Stickoxiden, insbesondere um einen nach dem Prinzip der selektiven katalytischen Reduktion (SCR) funktionierenden Katalysator. Dementsprechend umfasst die Abgaskomponente Stickoxide $NO_x$, wobei der Abgassensor ein zur Messung von Stickoxiden eingerichteter Sensor ist, insbesondere ein $NO_x$-Sensor. Alternativ können jedoch auch Lambdasonden zur $NO_x$-Messung eingesetzt werden, die über eine entsprechende Querempfindlichkeit verfügen und ein entsprechendes, mit der $NO_x$-Konzentration korrelierendes Ausgangssignal bereitstellen.

Bei dem zudosierten Reduktionsmittel handelt es sich vorzugsweise um Ammoniak $NH_3$ oder um eine Vorläuferverbindung von diesem, wobei hier insbesondere Harnstoff in Betracht kommt. Der Harnstoff kann in Form fester Harnstoffpellets, vorzugsweise jedoch in Form einer insbesondere wässrigen Harnstofflösung eingesetzt werden. Der zudosierte Harnstoff reagiert im Wege der Thermolyse und Hydrolyse unter Freisetzung von $NH_3$. Grundsätzlich kann im Rahmen der Erfindung das Reduktionsmittel Ammoniak auch über $NH_3$-Speichermaterialien bevorratet werden, die Ammoniak in Abhängigkeit von der Temperatur reversibel binden beziehungsweise freisetzen. Entsprechende Metallamminspeicher wurden eingangs bereits erläutert.

Die Anwendung des erfindungsgemäßen Verfahrens auf andere Abgaskatalysatoren, beispielsweise $NO_x$-Speicherkatalysatoren, Drei-Wege-Katalysatoren oder Oxidationskatalysatoren, ist ebenfalls möglich.

Nach einer weiteren bevorzugten Ausführung der Erfindung weist die Abgasnachbehandlungseinrichtung ferner einen Oxidationskatalysator auf. Dieser ist vorzugsweise stromauf des zu diagnostizierenden SCR-Katalysators angeordnet. Hierdurch wird erreicht, dass das $NO_2$/NO-Verhältnis des Abgases vergrößert wird, wodurch eine verbesserte $NO_x$-Konvertierungsleistung des nachgeschalteten SCR-Katalysators erzielt wird. Sofern darüber hinaus der Oxidationskatalysator der Reduktionsmitteldosierung nachgeschaltet ist, führt er zudem zu einer verbesserten Homogenisierung des zugeführten Reduktionsmittels im Abgas, bevor es in den SCR-Katalysator eintritt.

Bei der Brennkraftmaschine handelt es sich um eine ständig oder zumindest zeitweise mager betriebene Brennkraftmaschine, insbesondere um einen Dieselmotor. Grundsätzlich ist die erfindungsgemäße Abgasnachbehandlungseinrichtung jedoch auch für zeitweise mager betriebene Ottomotoren, insbesondere schichtladefähige Ottomotoren, mit Vorteil einsetzbar.

Die Erfindung wird nachfolgend in Ausführungsbeispielen anhand der zugehörigen Zeichnungen näher erläutert. Es zeigen:

Figur 1 eine schematische Darstellung einer Abgasanlage nach einer vorteilhaften Ausgestaltung der Erfindung und

Figur 2 ein Fließdiagramm zur Durchführung einer Diagnose eines SCR-Katalysators nach einer vorteilhaften Ausgestaltung der Erfindung.

Die Erfindung wird nachfolgend am Beispiel eines SCR-Katalysators dargestellt. Es versteht sich jedoch, dass die Erfindung ebenso auch für andere Abgaskatalysatoren Einsatz finden kann.

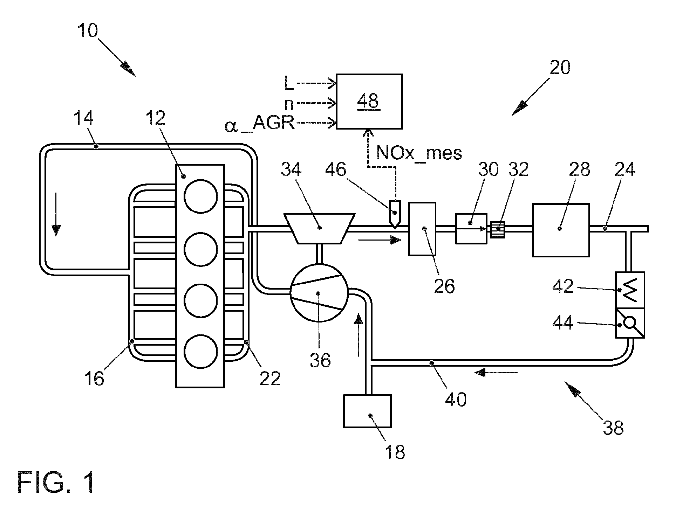

In Figur 1 ist ein insgesamt mit 10 bezeichnetes Kraftfahrzeug angedeutet, das durch eine zumindest zeitweise mager betriebene Brennkraftmaschine 12, insbesondere einen Dieselmotor als Traktionsquelle angetrieben wird. Die Brennkraftmaschine 12 weist hier beispielsweise vier Zylinder auf, wobei eine beliebige, hiervon abweichende Zylinderanzahl möglich ist.

Die Brennkraftmaschine 12 wird über eine Luftleitung 14 sowie einen daran angeschlossenen Luftkrümmer 16, der die angesaugte Luft den Zylindern zuführt, mit Verbrennungsluft versorgt. Die aus der Umgebungsluft angesaugte Verbrennungsluft wird über einen Luftfilter 18 von partikulären Bestandteilen gereinigt.

Das Kraftfahrzeug 10 weist ferner eine erfindungsgemäße, insgesamt mit 20 bezeichnete Abgasanlage zur katalytischen Nachbehandlung eines Abgases der Brennkraftmaschine 12 auf. Die Abgasanlage 20 umfasst einen Abgaskrümmer 22, der die einzelnen Zylinderauslässe der Zylinder der Brennkraftmaschine 12 mit einem Abgaskanal 24 verbindet. Der Abgaskanal 24 weist einen motornahen Abschnitt (hier dargestellt) sowie einen nicht dargestellten Unterbodenabschnitt auf, welcher in einem Auspuffrohr endet. Der Abgaskanal 24 beherbergt verschiedene Komponenten zur Abgasnachbehandlung.

In dem dargestellten Beispiel trifft das Abgas zunächst auf einen Oxidationskatalysator 26. Dieser weist ein Katalysatorsubstrat auf, welches mit einer katalytischen Beschichtung beschichtet ist, welche die Oxidation von Abgaskomponenten katalysiert. Insbesondere ist diese geeignet, unverbrannte Kohlenwasserstoffe HC und Kohlenmonoxid CO in $CO_2$ und $H_2O$ umzusetzen. Darüber hinaus ist die katalytische Beschichtung des Oxidationskatalysators 26 ausgelegt, NO und $N_2O$ zu $NO_2$ zu oxidieren, um das $NO_2$/NO-Verhältnis zu vergrößern. Die katalytische Beschichtung des Oxidationskatalysators 26 enthält als katalytische Komponente insbesondere mindestens ein Element der Platingruppenmetalle Pt, Pd, Rh, Ru, Os oder Ir oder eine Kombination von diesen, insbesondere Pt und/oder Pd. Die katalytische Beschichtung enthält ferner einen Washcoat, der eine poröse keramische Matrix mit einer großen spezifischen Oberfläche umfasst, beispielsweise auf Zeolith-Basis, welche mit der katalytischen Komponente dotiert ist. Bei dem Substrat des Oxidationskatalysators 26 kann es sich um ein metallisches Substrat oder einen keramischen Monolith handeln, insbesondere mit einer wabenähnlichen Struktur mit einer Mehrzahl durchgehender, paralleler Strömungskanäle. Geeignete keramische Materialien schließen Aluminiumoxid, Cordierit, Mullit und Siliziumcarbid ein. Geeignete Metallsubstrate sind etwa aus rostfreien Stählen oder Eisen-Chrom-Legierungen gefertigt.

Stromab des Oxidationskatalysators 26 ist ein weiterer Abgaskatalysator, hier ein SCR-Katalysator 28 im Abgaskanals 24 angeordnet. Der SCR-Katalysator 28 umfasst ebenso wie der Oxidationskatalysator 26 ein Katalysatorsubstrat auf metallischer oder keramischer Basis, vorzugsweise auf keramischer Basis. Geeignete keramische oder metallische Materialien entsprechen den im Zusammenhang mit dem Oxidationskatalysator genannten. Die inneren Wände der parallelen und durchgehenden Strömungskanäle des Substrats sind mit einer SCRkatalytischen Beschichtung beschichtet, welche die Reduktion von Stickoxiden zu Stickstoff unter selektivem Verbrauch eines Reduktionsmittels bewirkt. Die Beschichtung umfasst wiederum einen Washcoat aus einer porösen keramischen Matrix mit großer spezifischer Oberfläche (z. B. ein Zeolith auf Aluminiumsilicat-Basis) und darauf verteilt angeordnete katalytische Substanzen. Geeignete SCR-katalytische Substanzen umfassen insbesondere Nichtedelmetalle, wie Fe, Cu, Va, Cr, Mo, W, sowie Kombinationen von diesen. Diese sind auf dem Zeolith abgeschieden und/oder die Zeolithmetalle sind durch Ionenaustausch partiell durch die entsprechenden Nichtedelmetallen ersetzt. Der SCR-Katalysator 28 ist bevorzugt in einer motornahen Position angeordnet. Insbesondere beträgt die Distanz (Abgaslaufweg) zwischen Zylinderauslass sowie einer Einströmstirnseite des SCR-Katalysators 28 höchstens 120 cm.

Die Abgasanlage 20 weist ferner eine Reduktionsmitteldosiereinrichtung 30 auf, mit welcher das Reduktionsmittel oder eine Vorläuferverbindung von diesem dem Abgas zudosiert wird. Beispielsweise wird das Reduktionsmittel mittels einer Düse stromauf des SCR-Katalysators 28 in den Abgasstrom eingebracht. Bei dem Reduktionsmittel handelt es sich typischerweise um Ammoniak $NH_3$, das in Form einer Vorläuferverbindung, insbesondere in Form von Harnstoff zudosiert wird. Vorzugsweise wird der Harnstoff in Form einer wässrigen Lösung aus einem nicht dargestellten Reservoir gefördert und zudosiert. In einem der Dosiereinrichtung 30 nachgelagerten Mischer 32 wird der Harnstoff mit dem heißen Abgas vermischt und im Wege der Thermolyse und Hydrolyse zu $NH_3$ und $CO_2$ zersetzt. Das $NH_3$ wird in der Beschichtung des SCR-Katalysators 28 gespeichert und dort zur Reduzierung von Stickoxiden verbraucht. Die Zudosierung des Reduktionsmittels über die Dosiereinrichtung 30 erfolgt üblicherweise über eine hier nicht dargestellte Steuerung, welche die Einrichtung 30 in Abhängigkeit von einem Betriebspunkt des Motors 12, insbesondere in Abhängigkeit von einer aktuellen $NO_x$-Konzentration des Abgases steuert.

Das Fahrzeug 10 umfasst ferner einen Abgasturbolader, der eine im Abgaskanal 24 angeordnete Turbine 34 aufweist, die beispielsweise über eine Welle mit einem in der Luftleitung 14 angeordneten Verdichter 36 verbunden ist. Die Turbine 34 entzieht dem Abgas kinetische Energie, mit welcher der Verdichter 36 angetrieben und die angesaugte Verbrennungsluft komprimiert wird. Üblicherweise ist dem Verdichter 36 ein hier nicht dargestellter Ladeluftkühler nachgeschaltet, welcher der Verbrennungsluft durch die Verdichtung entstandene Wärme entzieht.

Das Kraftfahrzeug 10 verfügt darüber hinaus über eine Niederdruck-Abgasrückführung (ND-AGR) 38. Diese weist eine Abgasrückführungsleitung 40 auf, welche auf der Niederdruckseite der Turbine 34 stromab des SCR-Katalysators 28 einen Teilstrom des Abgases dem Abgaskanal 24 entnimmt und in die Luftleitung 14 auf der Niederdruckseite des Verdichters 36 einspeist. Ein in der AGR-Leitung 40 angeordneter AGR-Kühler 42 bewirkt eine Kühlung des heißen, zurückgeführten Abgases. Durch ein ebenfalls in der AGR-Leitung 40 angeordnetes AGR-Ventil 44 wird die AGR-Rate, das heißt der rückgeführte Abgasanteil in der Verbrennungsluft der Brennkraftmaschine 12 gesteuert. Üblicherweise wird das AGR-Ventil 44 in Abhängigkeit von einem Betriebspunkt der Brennkraftmaschine 12 gesteuert, wobei das Ventil 44 zwischen einer vollständig geschlossenen Position (AGR-Raten von Null, vollständige Deaktivierung der AGR) und einer vollständig geöffneten Position stufenlos angesteuert werden kann.

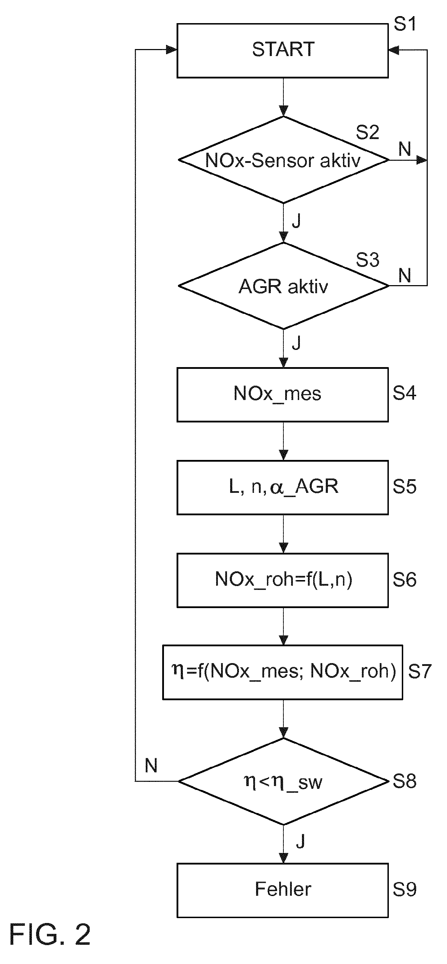

Wie alle Abgaskatalysatoren unterliegen auch der SCR-Katalysator 28 einer altersbedingten Verschlechterung seiner katalytischen Aktivität. Aus diesem Grund ist eine laufende Diagnose des SCR-Katalysators 28 erforderlich, um ein inakzeptables Nachlassen seiner katalytischen Aktivität festzustellen. Erfindungsgemäß erfolgt die Diagnose des SCR-Katalysators 28 mithilfe eines stromauf von diesem angeordneten $NO_x$-Sensors 46. Vorzugsweise ist der Sensor 46 stromauf der Reduktionsmitteldosiereinrichtung 30 und besonders bevorzugt stromauf des Oxidationskatalysators 26 angeordnet. Durch die sehr motornahe Anordnung des $NO_x$-Sensors 46 wird ein schnelles Erreichen seiner Betriebsfähigkeit nach einem Kaltstart des Motors 12 erzielt. Ein Ausgangssignal NOx_mes des $NO_x$-Sensors 46 geht als Eingangsgröße in eine Diagnoseeinrichtung 48 ein. Weiterhin erhält die Diagnoseeinrichtung 48 Informationen über die aktuelle AGR-Rate $\alpha$_AGR und den aktuellen Betriebspunkt der Brennkraftmaschine 12, insbesondere in Form einer Motorlast L sowie einer Motordrehzahl n. In Abhängigkeit von diesen und gegebenenfalls anderen Größen führt die Diagnoseeinrichtung eine Diagnose des SCR-Katalysators 28 gemäß dem erfindungsgemäßen Verfahren aus, welches nachfolgend anhand von Figur 2 näher erläutert wird.

Figur 2 zeigt beispielhaft einen Ablauf des erfindungsgemäßen Verfahrens zur Diagnose eines SCR-Katalysators in Form eines Fließdiagramms, welches in regelmäßigen Abständen durch die Diagnoseeinrichtung 48 ausgeführt wird.

Das Verfahren wird in Schritt S1 initialisiert und geht sodann zu der Abfrage S2 weiter, in welcher abgefragt wird, ob der $NO_x$-Sensor 46 aktiv ist. Sofern dies beispielsweise nach einem Kaltstart nicht der Fall ist, kann die Diagnose nicht durchgeführt werden und das Verfahren geht zurück zum Anfang. Ist der $NO_x$-Sensor 46 andererseits aktiv, das heißt sein Ausgangssignal ist freigegeben, geht das Verfahren zu einer zweiten Abfrage S3 über, welche überprüft, ob die Abgasrückführung 38 aktiv ist, das heißt das AGR-Ventil 44 zumindest teilweise geöffnet ist. Sofern die Abgasrückführung nicht aktiv ist, kann die Diagnose nicht durchgeführt werden und das Verfahren geht zu seinem Anfang zurück. Ist hingegen die Abgasrückführung aktiv, das heißt die Abfrage in S3 wird bejaht, wird die Diagnose des SCR-Katalysators 28 ausgeführt.

Zu diesem Zweck wird in Schritt S4 das Ausgangssignal des $NO_x$-Sensors 46 durch die Diagnoseeinrichtung 48 eingelesen und in Abhängigkeit von dem Sensorsignal die aktuelle Konzentration des Abgases an Stickoxiden NOx_mes ermittelt. Typischerweise wird zu diesem Zweck eine gespeicherte Sensorkennlinie verwendet, welche die $NO_x$-Konzentration in Abhängigkeit von dem Sensorsignal, beispielsweise einer Sensorspannung, abbildet. Es versteht sich, dass mit dem Begriff "Konzentration" jegliche Gehaltsangabe der Abgaskomponente im Abgas verstanden wird, unabhängig von der Einheit.

Anschließend werden in Schritt S5 verschiedene Eingangsgrößen durch die Diagnoseeinrichtung 48 eingelesen. Insbesondere umfassen diese die Motorlast L, welche beispielsweise anhand einer Gaspedalbetätigung durch einen Fahrer ermittelt wird, die Motordrehzahl n sowie die aktuelle AGR-Rate $\alpha$_AGR. In Abhängigkeit von der Motorlast L und Drehzahl n wird die aktuelle $NO_x$-Rohemission NOx_roh der Brennkraftmaschine modelliert. Dies kann entweder rechnerisch mithilfe eines mathematischen Modells erfolgen oder unter Verwendung gespeicherter Kennlinien oder Kennfelder. Insbesondere kommt hier ein Kennfeld zum Einsatz, welches die $NO_x$-Rohemission NOx_roh in Abhängigkeit von L und n abbildet. Die Ermittlung derartiger Kennfelder beispielsweise auf einem Motorprüfstand ist bekannt und wird hier nicht näher erläutert.

Anschließend erfolgt in Schritt S7 die Bestimmung eines Diagnosewerts des SCR-Katalysators 28 bezüglich seiner Umsetzung von $NO_x$. Insbesondere wird hier ein Wirkungsgrad $\eta$ berechnet, wozu die modellierte Rohemission NOx_roh der Brennkraftmaschine 12 zu der gemessenen $NO_x$-Konzentration NOx_mes in ein Verhältnis gesetzt wird.

Beispielsweise kann der Wirkungsgrad η gemäß folgender Gleichung bestimmt werden:

$$\eta = 1 - \frac{\alpha\_AGR^{-1}(NOx\_mes - NOX\_roh)}{NOx\_roh}$$

Anschließend wird in Schritt S8 der ermittelte Wirkungsgrad η mit einer Wirkungsgradschwelle η_sw verglichen. Vorzugsweise wird die Schwelle η_sw in Abhängigkeit von dem Motorbetriebspunkt (L, n) von der Diagnoseeinrichtung 48 vorbestimmt. Sofern der aktuell bestimmte Wirkungsgrad größer oder gleich η_sw ist, die Abfrage somit verneint wird, liegt ein intakter SCR-Katalysator 28 vor und das Verfahren geht zum Ausgangspunkt zurück. Gegebenenfalls kann hier der aktuelle Diagnosewert η zur Dokumentation gespeichert werden. Wird die Abfrage in Schritt S8 jedoch bejaht, das heißt der Wirkungsgrad η ist unterhalb der Schwelle gefallen, wird in Schritt S9 ein Fehler des Katalysators 28 festgestellt. Der Fehler kann als akustisches oder visuelles Signal einem Fahrer des Fahrzeugs angezeigt werden und/oder an das Motorsteuergerät übergeben werden, wo es beim nächsten Serviceintervall ausgelesen werden kann.

**Bezugszeichenliste**

10 Kraftfahrzeug
12 Brennkraftmaschine
14 Luftleitung
16 Luftkrümmer
18 Luftfilter
20 Abgasanlage
22 Abgaskrümmer
24 Abgaskanal
26 Oxidationskatalysator
28 Abgaskatalysator / SCR-Katalysator
30 Reduktionsmitteldosiereinrichtung
32 Mischer
34 Turbine
36 Verdichter
38 Niederdruck-Abgasrückführung
40 Abgasrückführungsleitung
42 AGR-Kühler
44 AGR-Ventil
46 NO$_x$-Sensor
48 Diagnoseeinrichtung

α_AGR AGR-Rate (Anteil Abgas in Verbrennungsluft)
L Motorlast
n Motordrehzahl
NOx_mes gemessene Konzentration der Abgaskomponente im Abgas vor Abgaskatalysator
NOx_roh modellierte Rohemission der Brennkraftmaschine an der Abgasgaskomponente

**Patentansprüche**

1. Verfahren zur Diagnose eines in einer Abgasanlage (20) einer Brennkraftmaschine (12) angeordneten Abgaskatalysators (28) zur katalytischen Umsetzung zumindest einer Abgaskomponente der Brennkraftmaschine (12), welche eine Abgasrückführung (40) aufweist, mit welcher ein Teilstrom des Abgases stromab des Abgaskatalysators (28) entnommen und der Verbrennungsluft der Brennkraftmaschine (12) zugeführt wird, umfassend die Maßnahmen:

   - Bestimmung einer modellierten Rohemission (NOx_roh) der Brennkraftmaschine (12) bezüglich der Abgaskomponente,
   - Messung einer aktuellen Konzentration der Abgaskomponente (NOx_mes) im Abgas stromauf des Abgaskatalysators (28), und

- Bestimmung eines Diagnosewerts des Abgaskatalysators (28) bezüglich der Umsetzung der Abgaskomponente in Abhängigkeit von der modellierten Rohemission (NOx_roh) der Brennkraftmaschine (12) und der gemessenen Konzentration der Abgaskomponente (NOx_mes).

**2.** Verfahren nach Anspruch 1, wobei in Abhängigkeit eines Verhältnisses der modellierten Rohemission (NOx_roh) und der gemessenen Konzentration (NOx_mes) ein Wirkungsgrad ($\eta$) des Abgaskatalysators (28) als Diagnosewert bestimmt wird.

**3.** Verfahren nach Anspruch 2, wobei der Wirkungsgrad ($\eta$) gemäß folgender Gleichung bestimmt wird, worin $\alpha\_AGR$ die Abgasrückführrate bedeutet:

$$\eta = 1 - \frac{\alpha\_AGR^{-1}(NOx\_mes - NOX\_roh)}{NOx\_roh}$$

**4.** Verfahren nach einem der vorhergehenden Ansprüche, wobei der für den Abgaskatalysator (28) bestimmte Diagnosewert ($\eta$) mit einem Sollwert ($\eta\_soll$) oder einem Schwellenwert ($\eta\_sw$) verglichen wird und bei einer Mindestabweichung von dem Sollwert ($\eta\_soll$) oder einer Überschreitung des Schwellenwerts ($\eta\_sw$) ein Fehler des Abgaskatalysators (28) festgestellt und ausgegeben wird.

**5.** Verfahren nach Anspruch 4, wobei der Sollwert ($\eta\_soll$) oder der Schwellenwert ($\eta\_sw$) in Abhängigkeit von einem aktuellen Betriebspunkt der Brennkraftmaschine (12) modelliert wird.

**6.** Verfahren nach Anspruch 5, wobei der Sollwert ($\eta\_soll$) oder der Schwellenwert ($\eta\_sw$) unter Verwendung eines Kennfeldes modelliert wird.

**7.** Verfahren nach einem der vorhergehenden Ansprüche, wobei die Rohemission (NOx_roh) der Brennkraftmaschine (12) in Abhängigkeit von einem aktuellen Betriebspunkt der Brennkraftmaschine (12) modelliert wird.

**8.** Verfahren nach Anspruch 7, wobei die Rohemission (NOx_roh) der Brennkraftmaschine (12) unter Verwendung eines Kennfeldes modelliert wird.

**9.** Diagnoseeinrichtung (48) zur Diagnose eines in einer Abgasanlage (20) einer Brennkraftmaschine (12) angeordneten Abgaskatalysators (28) zur katalytischen Umsetzung zumindest einer Abgaskomponente der Brennkraftmaschine (12), **dadurch gekennzeichnet dass** die Diagnoseeinrichtung (48) eingerichtet ist, das Verfahren nach einem der Ansprüche 1 bis 8 auszuführen.

**10.** Kraftfahrzeug (10) mit einer Brennkraftmaschine (12); einer an dieser angeschlossenen Abgasanlage (20); einem in der Abgasanlage (20) angeordneten Abgaskatalysator (28) zur katalytischen Umsetzung zumindest einer Abgaskomponente der Brennkraftmaschine (12); einem stromauf des Abgaskatalysators (28) angeordneten Abgassensor zur Messung einer aktuellen Konzentration der Abgaskomponente (NOx_mes) im Abgas; einer Abgasrückführung zur Entnahme eines Teilstroms des Abgases stromab des Abgaskatalysators (28) und Zuführung des entnommenen Abgasteilstroms zu der Verbrennungsluft der Brennkraftmaschine (12); sowie einer Diagnoseeinrichtung (48) nach Anspruch 9.

**11.** Kraftfahrzeug (10) nach Anspruch 10, wobei der Abgaskatalysator (28) ein Katalysator zu Reduktion von Stickoxiden ist.

**12.** Kraftfahrzeug (10) nach Anspruch 11, wobei der Abgaskatalysator (28) ein SCR-Katalysator (28) ist.

**13.** Kraftfahrzeug (10) nach Anspruch 10, 11 oder 12, wobei die Abgaskomponente Stickoxide ($NO_x$) umfasst und der Abgassensor (46) ein $NO_x$-Sensor ist.

**Claims**

**1.** Method for diagnosing an exhaust gas catalytic converter (28), arranged in an exhaust system (20) of an internal combustion engine (12), for catalytically converting at least one exhaust gas component of the internal combustion engine (12) which has an exhaust gas recirculation system (40) with which a partial flow of the exhaust gas is extracted downstream of the exhaust gas catalytic converter (28) and fed to the combustion air of the internal combustion engine (12), comprising the measures:

- determining a modelled raw emission (NOx_raw) of the internal combustion engine (12) with respect to the exhaust gas component,
- measuring the current concentration of the exhaust gas component (NOx_mes) in the exhaust upstream of the exhaust gas catalytic converter (28), and
- determining a diagnostic value of the exhaust gas catalytic converter (28) with respect to the conversion of the exhaust gas component as a function of the modelled raw emission (NOx_raw) of the internal combustion engine (12) and of the measured concentration of the exhaust gas component (NOx_mes).

2. Method according to Claim 1, wherein an efficiency level ($\eta$) of the exhaust gas catalytic converter (28) is determined as a diagnostic value as a function of a ratio of the modelled raw emission (NOx_raw) and the measured concentration (NOx_mes).

3. Method according to Claim 2, wherein the efficiency level ($\eta$) is determined according to the following equation, wherein $\alpha\_EGR$ signifies the exhaust gas recirculation rate:

$$\eta = 1 - \frac{\alpha\_EGR^{-1}\left(NOx\_mes - NOX\_raw\right)}{NOx\_raw}.$$

4. Method according to one of the preceding claims, wherein the diagnostic value ($\eta$) which is determined for the exhaust gas catalytic converter (28) is compared with a setpoint value ($\eta\_setp$) or a threshold value ($\eta\_th$), and in the case of a minimum deviation from the setpoint value ($\eta\_setp$) or in the case of the threshold value ($\eta\_th$) being exceeded a fault of the exhaust gas catalytic converter (28) is detected and output.

5. Method according to Claim 4, wherein the setpoint value ($\eta\_setp$) or the threshold value ($\eta\_th$) is modelled as a function of a current operating point of the internal combustion engine (12).

6. Method according to Claim 5, wherein the setpoint value ($\eta\_setp$) or the threshold value ($\eta\_th$) is modelled using a characteristic diagram.

7. Method according to one of the preceding claims, wherein the raw emission (NOx_raw) of the internal combustion engine (12) is modelled as a function of a current operating point of the internal combustion engine (12).

8. Method according to Claim 7, wherein the raw emission (NOx_raw) of the internal combustion engine (12) is modelled using a characteristic diagram.

9. Diagnostic device (48) for diagnosing an exhaust gas catalytic converter (28), arranged in an exhaust system (20) of an internal combustion engine (12), for catalytically converting at least one exhaust gas component of the internal combustion engine (12), **characterized in that** the diagnostic device (48) is designed to carry out the method according to one of Claims 1 to 8.

10. Motor vehicle (10) having: an internal combustion engine (12); an exhaust system (20) connected thereto; an exhaust gas catalytic converter (28), arranged in the exhaust system (20), for catalytically converting at least one exhaust gas component of the internal combustion engine (12); an exhaust gas sensor arranged upstream of the exhaust gas catalytic converter (28), for measuring a current concentration of the exhaust gas component (NOx_mes) in the exhaust gas; an exhaust gas recirculation system for extracting a partial flow of the exhaust gas downstream of the exhaust gas catalytic converter (28) and feeding the extracted exhaust gas partial flow to the combustion air of the internal combustion engine (12); and a diagnostic device (48) according to Claim 9.

11. Motor vehicle (10) according to Claim 10, wherein the exhaust gas catalytic converter (28) is a catalytic converter for reducing nitrogen oxides.

12. Motor vehicle (10) according to Claim 11, wherein the exhaust gas catalytic converter (28) is an SCR catalytic converter (28).

**13.** Motor vehicle (10) according to Claim 10, 11 or 12, wherein the exhaust gas component comprises nitrogen oxides ($NO_x$), and the exhaust gas sensor (46) is an $NO_x$ sensor.

**Revendications**

**1.** Procédé pour diagnostiquer un catalyseur de gaz d'échappement (28) disposé dans un système de gaz d'échappement (20) d'une machine à combustion interne (12) pour convertir catalytiquement au moins un constituant de gaz d'échappement de la machine à combustion interne (12) comportant une conduite de gaz d'échappement (40), au moyen duquel un flux partiel du gaz d'échappement est prélevé en aval du catalyseur de gaz d'échappement (28) et l'air de combustion est acheminé vers la machine à combustion interne (12), comprenant les étapes suivantes :

- déterminer une émission brute modélisée (NOx_roh) de la machine à combustion interne (12) en ce qui concerne les constituants de gaz d'échappement,
- mesurer une concentration actuelle des constituants de gaz d'échappement (NOx_mes) dans le gaz d'échappement en aval du catalyseur de gaz d'échappement (28), et
- déterminer une valeur de diagnostic du catalyseur de gaz d'échappement (28) en ce qui concerne la conversion des constituants de gaz d'échappement en fonction de l'émission brute modélisée (NOx_roh) de la machine à combustion interne (12) et de la concentration mesurée des constituants de gaz d'échappement (NOx_mes).

**2.** Procédé selon la revendication 1, dans lequel un rendement ($\eta$) du catalyseur de gaz d'échappement (28) est déterminé en tant que valeur de diagnostic en fonction d'un rapport de l'émission brute mesurée (NOx_roh) à la concentration mesurée (NOx_mes).

**3.** Procédé selon la revendication 2, dans lequel le rendement ($\eta$) est déterminé conformément à l'équation suivante, dans laquelle $\alpha$_AGR représente le taux de recirculation du gaz d'échappement :

$$\eta = 1 - \frac{\alpha\_AGR^{-1}(NOx\_mes - NOx\_roh)}{NOx\_roh}.$$

**4.** Procédé selon l'une quelconque des revendications précédentes, dans lequel la valeur de diagnostic ($\eta$) déterminée pour le catalyseur de gaz d'échappement (28) est comparée à une valeur théorique ($\eta$_soll) ou à une valeur de seuil ($\eta$_sw) et lorsqu'il se produit un écart minimum par rapport à la valeur théorique ($\eta$_soll) ou un dépassement de la valeur de seuil ($\eta$_sw), un défaut du catalyseur de gaz d'échappement (28) est établi et fourni en sortie.

**5.** Procédé selon la revendication 4, dans lequel la valeur théorique ($\eta$_soll) ou la valeur de seuil ($\eta$_sw) est modélisée en fonction d'un point de fonctionnement actuel de la machine à combustion interne (12).

**6.** Procédé selon la revendication 5, dans lequel la valeur théorique ($\eta$_soll) ou la valeur de seuil ($\eta$_sw) est modélisée par utilisation d'un diagramme caractéristique.

**7.** Procédé selon l'une quelconque des revendications précédentes, dans lequel l'émission brute (NOx_roh) de la machine à combustion interne (12) est modélisée en fonction d'un point de fonctionnement actuel de la machine à combustion interne (12).

**8.** Procédé selon la revendication 7, dans lequel l'émission brute (NOx_roh) de la machine à combustion interne (12) est modélisée par utilisation d'un diagramme caractéristique.

**9.** Dispositif de diagnostic (48) d'un catalyseur de gaz d'échappement (28) disposé dans un système de gaz d'échappement (20) d'une machine à combustion interne (12) pour convertir catalytiquement au moins un constituant de gaz d'échappement de la machine à combustion interne (12), **caractérisé en ce que** le dispositif de diagnostic (48) est conçu pour mettre en oeuvre le procédé selon l'une quelconque des revendications 1 à 8.

**10.** Véhicule automobile (10) comportant une machine à combustion interne (12) ; un système de gaz d'échappement (20) relié à celle-ci ; un catalyseur de gaz d'échappement (28) disposé dans le système de gaz d'échappement (20) pour convertir catalytiquement au moins un constituant de gaz d'échappement de la machine à combustion interne (12) ; un capteur de gaz d'échappement disposé en aval du catalyseur de gaz d'échappement (28) pour mesurer une concentration actuelle des constituants de gaz d'échappement (NOx_mes) dans le gaz d'échappement ; une conduite de gaz d'échappement destinée au prélèvement d'un flux partiel du gaz d'échappement en aval du catalyseur de gaz d'échappement (28) et à l'introduction du flux partiel de gaz d'échappement prélevé dans l'air de combustion de la machine à combustion interne (12) ; ainsi qu'un dispositif de diagnostic (48) selon la revendication 9.

11. Véhicule automobile (10) selon la revendication 10, dans lequel le catalyseur de gaz d'échappement (28) est un catalyseur de réduction des oxydes d'azote.

12. Véhicule automobile (10) selon la revendication 11, dans lequel le catalyseur de gaz d'échappement (28) est un catalyseur SCR (28).

13. Véhicule automobile (10) selon la revendication 10, 11 ou 12, dans lequel le constituant de gaz d'échappement comprend de l'oxyde d'azote ($NO_x$) et le capteur de gaz d'échappement (46) est un capteur de $NO_x$.

FIG. 1

FIG. 2

## IN DER BESCHREIBUNG AUFGEFÜHRTE DOKUMENTE

### In der Beschreibung aufgeführte Patentdokumente

- DE 102010042442 A1
- US 20110146269 A1

- US 20120233984 A1